# EUROPEAN PATENT APPLICATION

(11) **EP 4 060 778 A1**
(43) Date of publication of application: **21.09.2022**
(21) Application number: 22159220.7
(22) Date of filing: 28.02.2022
(51) Int. Cl.: H01M 10/04, B23K 26/364

(54) **DEVICE FOR MANUFACTURING ELECTRODE**

(30) Priority: 18.03.2021 KR 20210035187; 25.05.2021 KR 20210066981; 17.01.2022 KR 20220006460
(71) Applicant: EO Technics Co., Ltd., Anyang-si, Gyeonggi-do 13930 (KR)
(72) Inventor: CHO, Kyung Deok, Ansan-si (KR); SHIN, Dong Hoon, Siheung-si (KR); LIM, Jong Han, Gunpo-si (KR); YOON, Sung Chul, Seongnam-si (KR)
(74) Representative: Neilson, Martin Mark

(57) **Abstract**

An electrode manufacturing device for manufacturing an electrode includes: a first support unit having a plate shape extending along a plane and injecting a first pressurized fluid in a 1^{st}-1^{st} direction perpendicular to the plane; a second support unit having a plate shape extending along one plane, disposed to face the first support unit at a certain distance, and injecting a second pressurized fluid in a 1^{st}-2^{nd} direction opposite to the 1^{st}-1^{st} direction; a transfer unit configured to transfer an electrode having a sheet-shape in a direction of gravity and dispose a first area of the electrode between the first support unit and the second support unit; and a laser beam notching unit configured to notch and cut a portion of a second area of the electrode by irradiating a laser beam to the electrode in the 1^{st}-1^{st} direction.

## Description

### CROSS-REFERENCE TO RELATED APPLICATIONS

This application is based on and claims priority under 35 U.S.C. §119 to Korean Patent Applications No. 10-2021-0035187, filed on March 18, 2021, No. 10-2021-0066981, filed on May 25, 2021, and No. 10-2022-0006460, filed on January 17, 2022 in the Korean Intellectual Property Office, the disclosures of which are incorporated by reference herein in their entireties.

### BACKGROUND

### 1. Field

One or more embodiments relate to an electrode manufacturing device and an electrode manufacturing method, and more particularly, to an electrode manufacturing device for performing an electrode notching process of forming an electrode tab by shearing an uncoated portion of an electrode of a secondary battery with a laser beam.

### 2. Description of the Related Art

A notching system, which is one of the devices for manufacturing a secondary battery, is a device for forming an electrode tab by shearing an uncoated portion of an electrode in the form of a sheet, and includes an unwinder that unwinds an electrode wound in a roll shape, a notching unit that shears a polymer electrode into an electrode shape using a press machine or a laser beam notching device, a vision inspection unit that inspects whether the sheared polymer electrode is sheared normally, and a rewinder that rewinds the sheared polymer electrode into a roll.

In the notching unit, there is a method of forming electrode tabs at regular intervals by aligning a unprocessed electrode below a punch of a press machine, then lowering the punch to shear a uncoated portion to which an active material of the electrode is not applied to a certain shape, and a method of shearing the electrode tab at regular intervals by irradiating a laser beam to the uncoated portion of the electrode from above the electrode.

Among these notching methods, in the method of shearing the electrode tab by irradiating a laser beam to a sheet-shaped electrode, one surface of the electrode may be supported in a pattern shape in order to shear a pattern shape of the electrode tab. However, in the shearing process, defects such as scratches may occur on the electrode due to the contact between a support unit and the electrode. In addition, in the notching method using a laser beam, the electrode tab may be improperly cut due to the accumulation of foreign materials on the electrode or the vibration of the electrode during shearing.

### SUMMARY

One or more embodiments include an electrode manufacturing device in which product defects and an increase in manufacturing cost, which may occur due to excessive adsorption and friction between an electrode and a support unit, are effectively prevented by supporting the electrode in a non-contact manner in a laser beam notching process.

One or more embodiments include an electrode manufacturing device in which laser beam interference that may be generated by dust and scrap is minimized by adjusting a discharge path of dust and scrap generated by a laser beam notch ing process.

Additional aspects will be set forth in part in the description which follows and, in part, will be apparent from the description, or may be learned by practice of the presented embodiments of the disclosure.

According to one or more embodiments, an electrode manufacturing device includes: a first support unit having a plate shape extending along a plane and injecting a first pressurized fluid in a 1^{st}-1^{st} direction perpendicular to the plane; a second support unit having a plate shape extending along one plane, disposed to face the first support unit at a certain distance, and injecting a second pressurized fluid in a 1^{st}-2^{nd} direction opposite to the 1^{st}-1^{st} direction; a transfer unit configured to transfer a sheet-shaped electrode in a direction of gravity and dispose a first area of the electrode between the first support unit and the second support unit; and a laser beam notching unit configured to notch and cut a portion of a second area of the electrode by irradiating a laser beam to the electrode in the 1^{st}-1^{st} direction.

The certain distance between the first support unit and the second support unit may be 0.01 mm or more and 1 mm or less.

Pressure applied to a first surface of the electrode by the first support unit may be 0.001 Mpa or more and 0.3 Mpa or less, and pressure applied to a second surface of the electrode by the second support unit may be 0.001 Mpa or more and 0.3 Mpa or less.

The first support unit may include one or more injection portions for injecting the first pressurized fluid, and the second support unit may include one or more injection portions for injecting the second pressurized fluid.

The one or more injection portions provided in the first support unit may be provided in plurality, and may be arranged to have uniform intervals on one plane of the first support unit disposed to face the electrode, and the one or more injection portions provided in the second support unit may be provided in plurality, and may be disposed to have uniform intervals on one plane of the second support unit disposed to face the electrode.

The one or more injection portions provided in the first support unit may be provided as one, and may include an orifice structure, and the one or more injection portions provided in the second support unit may be provided as one, and may include an orifice structure.

At least one of the first support unit and the second support unit may include a porous plate.

The electrode manufacturing device may further include: a first fluid pressurizing unit configured to adjust pressure of the first pressurized fluid and a second fluid pressurizing unit configured to adjust pressure of the second pressurized fluid.

The electrode manufacturing device may further include: a dust removal unit configured to apply suction pressure to remove dust generated from the process of notching and cutting the electrode using the laser beam.

The dust removal unit may include a first dust removal device and a second dust removal device disposed to face each other with the electrode therebetween.

The first dust removal device may include a 1^{st}-1^{st} dust removal device including a suction port disposed on one side of the electrode and a 1^{st}-2^{nd} dust removal device including a suction port disposed on the other side of the electrode.

A direction of a 1^{st}-1^{st} fluid flow generated by 1^{st}-1^{st} suction pressure in the 1^{st}-1^{st} dust removal device may be different from the 1^{st}-1^{st} direction, and a direction of a 2^{nd}-1^{st} fluid flow generated by 2^{nd}-1^{st} suction pressure in the1^{st}-2^{nd} dust removal device may be different from the 1^{st}-1^{st} direction.

The second dust removal device may include a 2^{nd}-1^{st} dust removal device including a suction port disposed on one side of the electrode and a 2^{nd}-2^{nd} dust removal device including a suction port disposed on the other side of the electrode.

A direction of a 1^{st}-1^{st} fluid flow generated by 2^{nd}-1^{st} suction pressure in the 2^{nd}-1^{st} dust removal device may be different from the 1^{st}-2^{nd} direction, and a direction of a 2^{nd}-1^{st} fluid flow generated by 2^{nd}-2^{nd} suction pressure in the 2^{nd}-2^{nd} dust removal device may be different from the 1^{st}-2^{nd} direction.

The electrode manufacturing device may further include: a first suction pressure-adjusting unit configured to adjust suction pressure of the first dust removal device and a second suction pressure-adjusting unit configured to adjust suction pressure of the second dust removal device.

The electrode manufacturing device may further include: a scrap removal unit disposed below the first support unit and the second support unit in the direction of gravity, and sucking scrap falling by gravity and discharging the scrap to the outside.

The scrap removal unit may include: a first scrap removal area and a second scrap removal area respectively disposed at upper and lower portions in the direction of gravity; and a pump configured to apply suction pressure to the first scrap removal area and the second scrap removal area.

A third fluid flow in the direction of gravity is formed in the first scrap removal area by third suction pressure, and a fourth fluid flow in a direction different from the direction of gravity may be formed in the second scrap removal area by fourth suction pressure.

The fourth suction pressure may exceed the third suction pressure.

The transfer unit may move the electrode at a speed of 1250 mm/s or more and 6000 mm/s or less.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a plan view of an electrode manufacturing device according to an embodiment;
FIG. 2 is a schematic view of an electrode manufacturing device according to an embodiment;
FIG. 3 is a schematic view of an electrode according to an embodiment;
FIG. 4 is a partial schematic view of an electrode manufacturing device according to an embodiment;
FIG. 5A is a graph illustrating vibration of an electrode supported by an electrode support unit according to a comparative example;
FIG. 5B is a graph illustrating vibration of an electrode supported by an electrode support unit according to Example 1;
FIG. 5C is a graph illustrating vibration of an electrode supported by an electrode support unit according to Example 2;
FIG. 6 is a plan view of a first support unit according to an embodiment;
FIG. 7A is a plan view of a first support unit according to another embodiment;
FIG. 7B is a side cross-sectional view of the first support unit shown in FIG. 7A;
FIG. 8 is a partial schematic view of an electrode manufacturing device according to an embodiment; and
FIG. 9 is a partial schematic view of an electrode manufacturing device according to an embodiment.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, embodiments will be described in detail with reference to the accompanying drawings. The same reference numerals refer to the same elements throughout. In the drawings, the sizes of constituent elements may be exaggerated for clarity.

It will be understood that, although the terms first, second, etc. may be used herein to describe various elements, these elements should not be limited by these terms. These terms are only used to distinguish one element from another. Thus, a first element, component, region, layer or section discussed below could be termed a second element, component, region, layer or section without departing from the teachings of the disclosure. As used herein, the term "and/or" includes any and all combinations of one or more of the associated listed items.

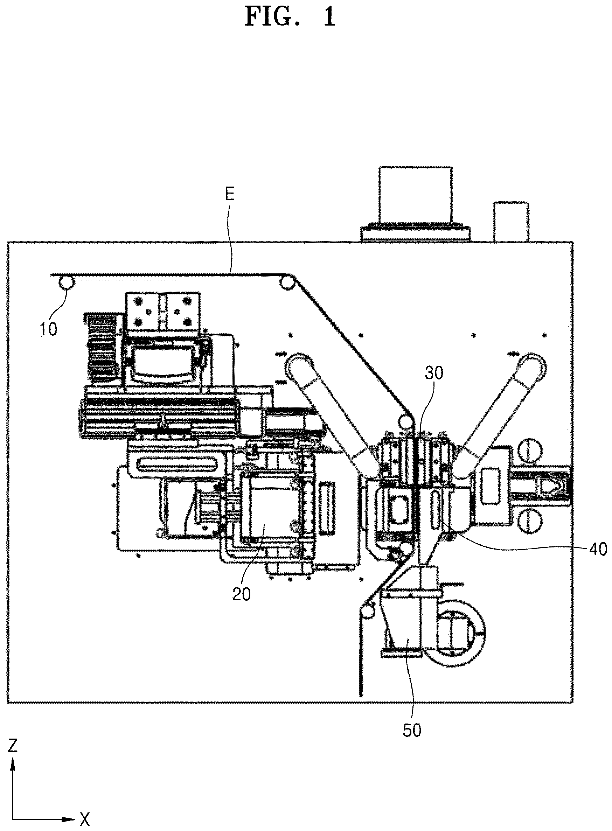

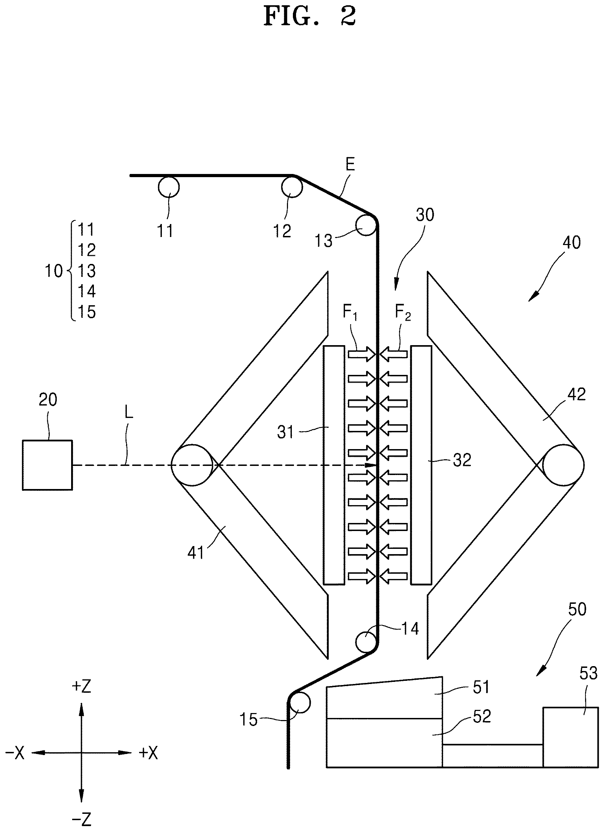

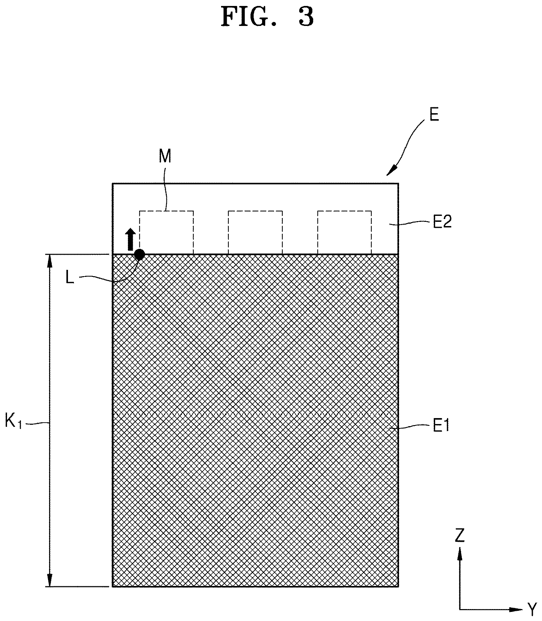

FIG. 1 is a plan view of an electrode manufacturing device according to an embodiment. FIG. 2 is a schematic view of an electrode manufacturing device according to an embodiment. FIG. 3 is a schematic view of an electrode according to an embodiment.

Referring to FIGS. 1 to 3, an electrode manufacturing device 1 according to an example may include a transfer unit 10, a laser beam notching unit 20, an electrode support unit 30, a dust removal unit 40, and a scrap removal unit 50. In the disclosure, an electrode E to be processed is prepared by applying an active material to a metal current collector formed of a thin metal plate. The electrode E coated with the active material on the metal current collector is formed in a sheet shape in the form of a long thin plate. For example, the metal current collector may be a metal such as aluminum, and the active material may be a positive electrode active material or a negative electrode active material used in a secondary battery, but other known materials may be used as the metal current collector or the active material.

The transfer unit 10 supports the transfer of the sheet-shaped electrode E. To this end, the transfer unit 10 guides and supports the electrode E between a supply unit and a recovery unit (not shown), and may include a plurality of wheels or rollers for this purpose. For example, the transfer unit 10 may transfer the electrode E so that a laser beam notching process is performed when the sheet-shaped electrode E is continuously supplied by the supply unit and the recovery unit is accurately seated at a processing position. For example, the transfer unit 10 may intermittently supply/recover the electrode E between the supply unit and the recovery unit. However, in the disclosure, a description will be focused on a method in which the electrode E continuously moves at a certain speed, for example, at a speed of 1250 mm/s or more and 6000 mm/s or less, according to a laser beam output irradiated by the laser beam notching unit 20 to be described below.

According to an example, the transfer unit 10 may include a plurality of rollers, for example, first to fifth rollers 11 to 15, disposed on an upper surface or a lower surface of the sheet-shaped electrode E. For example, the transfer unit 10 may include the first roller 11 to the third roller 13 disposed on the electrode support unit 30 to transfer the electrode E wound from the supply portion to the electrode support unit 30, and the fourth roller 14 and a fifth roller 15 disposed below the electrode support unit 30 to transfer the electrode E to the recovery unit. In this case, the third roller 13 and the fourth roller 14 disposed with the electrode support unit 30 therebetween may be disposed to be apart from each other in a direction of gravity (a -Z direction). Accordingly, the electrode E may pass through the electrode support unit 30 in the direction of gravity (the -Z direction) by rotation of the third roller 13 and the fourth roller 14. At this time, a first area E1 of the electrode shown in FIG. 3 may be supported by the electrode support unit 30, and laser beam processing may be performed on a second area E2 of the electrode by the laser beam notching unit 20.

The laser beam notching unit 20 outputs and irradiates a laser beam L for cutting the electrode E. The laser beam notching unit 20 according to an example may irradiate the laser beam L in a direction perpendicular to one plane of the electrode E, for example, a 1^{st}-1^{st} direction (a +X direction). In this case, the laser beam notching unit 20 may irradiate the laser beam L toward the remaining area except for the first area E1 of the electrode shown in FIG. 3 supported by the electrode support unit 30, that is, the second area E2 of the electrode. In this case, the laser beam L may move along a predetermined line M to be cut and cut a portion of the second area E2 of the electrode.

The laser beam notching unit 20 according to an example may be configured to output an IR pulse-type fiber laser beam having a high energy density. At this time, a laser beam having power of 200 W or more and 300 W or less, a frequency of 200 kHz band, and a depth of focus of 0.8 mm may be output, but a laser beam having a high energy density of a small wavelength may be used instead, and the disclosure is not limited thereto.

The electrode support unit 30 may support the electrode E moving in the direction of gravity (the -Z direction) while the laser beam notching process is in progress. The electrode support unit 30 according to an example needs to accurately support the electrode E while not hindering the movement of the continuously moving electrode E. In the prior art, because an electrode support unit supporting a continuously moving electrode E supports the electrode E in a contact manner in a horizontal direction perpendicular to the direction of gravity (the -Z direction), excessive adsorption and friction between the electrode E and the electrode support unit occurs, which results in product defects. In addition, when the electrode E moves in another direction perpendicular to the direction of gravity (the -Z direction), there is a problem in that a focus position of a laser beam is inaccurate due to sagging and vibration of the electrode E due to gravity.

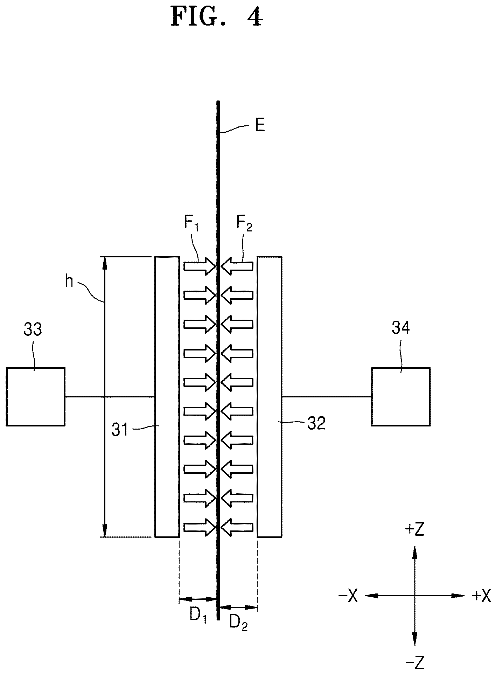

The electrode support unit 30 according to an example may include a first support unit 31 and a second support unit 32 disposed to face each other and injecting a pressurized fluid in opposite directions. In this case, the electrode E may be disposed between the first support unit 31 and the second support unit 32 to be supported in a non-contact manner. For example, the first support unit 31 has a plate shape extending along one plane (a YZ plane), and may inject a first pressurized fluid F1 in the 1^{st}-1^{st} direction (the +X direction) perpendicular to the one plane (the YZ plane). In addition, the second support unit 32 may have a plate shape extending along the one plane (the YZ plane). At this time, the second support unit 32 may be disposed to face the first support unit 31 with a certain interval therebetween, and may inject a second pressurized fluid F2 in the 1^{st}-2^{nd} direction (the -X direction) opposite to the 1^{st}-1^{st} direction (the +X direction). Detailed descriptions of the first support unit 31 and the second support unit 32 are provided below with reference to FIGS. 4 to 7B.

The dust removal unit 40 may suck and remove dust B generated by a process of notching and cutting the electrode E using the laser beam L. For example, the dust B may be a foreign material having a diameter of 20 µm or less and floating around the electrode E. However, the disclosure is not limited thereto, and in the process of notching and cutting the electrode E using the laser beam L, any foreign material disposed around the electrode E may be defined as the dust B.

For example, the dust removal unit 40 may include a first dust removal device 41 and a second dust removal device 42 disposed to face each other with the electrode E therebetween. However, the disclosure is not limited thereto, and any one of the first dust removal device 41 and the second dust removal device 42 may be disposed.

According to an example, the first dust removal device 41 may be disposed between the laser beam notching unit 20 and the first support unit 31 to face one surface of the electrode E to absorb the dust B. In addition, the second dust removal device 42 is disposed to face the first dust removal device 41, and may be disposed to face the other surface of the electrode E to absorb the dust B. However, the disclosure is not limited thereto, and according to another example, the first dust removal device 41 may be disposed to face one side of the electrode E disposed perpendicular to one surface of the electrode E to absorb the dust B. In addition, the second dust removal device 42 may be disposed to face the other side of the electrode E to absorb the dust B.

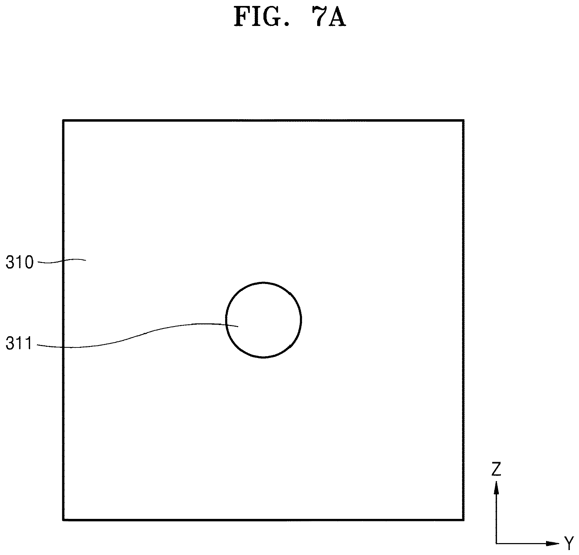

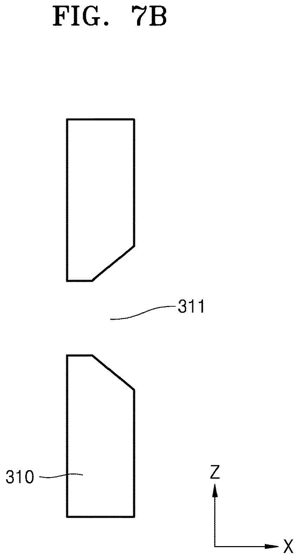

According to an example, the dust removal unit 40 is disposed adjacent to the electrode E, and may suck the dust B floating near the electrode E and discharge the dust B to the outside. The dust removal unit 40 according to an example may form suction pressure to suck the dust B. At this time, the electrode E vibrates by the suction pressure formed by the dust removal unit 40, and a focus position of a laser beam may be inaccurate. In order to solve this problem, the dust removal unit 40 according to an example may form suction pressure to have a certain angle with the first pressurized fluid F1 and the second pressurized fluid F2. Detailed descriptions of of a path of the suction pressure using the dust removal unit 40, the first pressurized fluid F1, and the second pressurized fluid F2 are provided below with reference to FIG. 7.

The scrap removal unit 50 may separate and discharge the scrap S generated by the process of notching and cutting. For example, the scrap S has a diameter exceeding 20 µm, and may be a foreign material separated from the electrode E. However, the disclosure is not limited thereto, and any foreign material falling by gravity in the process of notching and cutting the electrode E using the laser beam L may be defined as the scrap S.

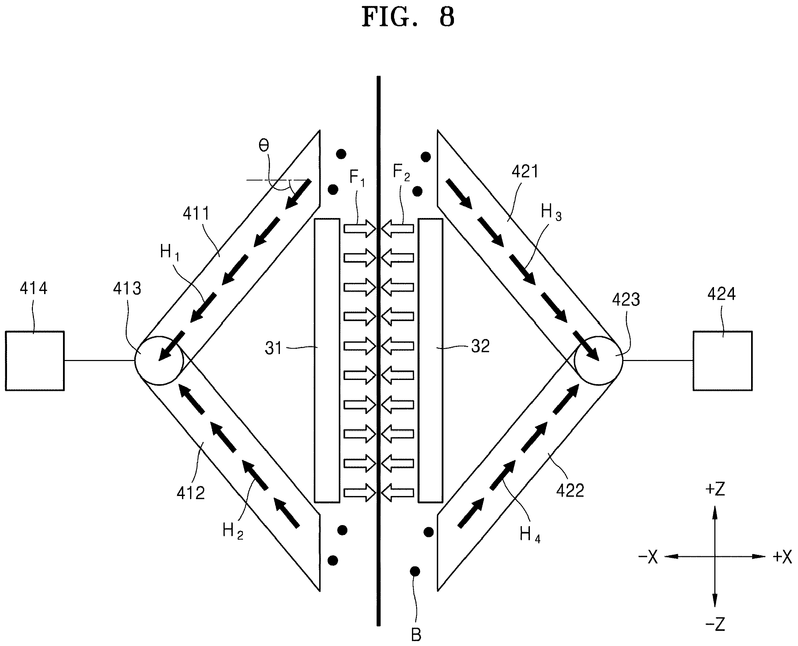

For example, the scrap removal unit 50 is disposed below the first support unit 31 and the second support unit 32 in the direction of gravity (the -Z direction), and may suck the scrap S falling by gravity and discharge the scrap S to the outside. The scrap removal unit 50 according to an example may form suction pressure to suck the scrap S. At this time, the electrode E vibrates by the suction pressure formed by the scrap removal unit 50, and the focus position of the laser beam may be inaccurate. To solve this problem, the scrap removal unit 50 according to an example may include a first scrap removal area 51, a second scrap removal area 52, and a pump 53. Detailed descriptions of the first scrap removal area 51, the second scrap removal area 52, and the pump 53 are provided below with reference to FIG. 8.

FIG. 4 is a partial schematic view of an electrode manufacturing device according to an embodiment.

Referring to FIG. 4, the electrode support unit 30 may include the first support unit 31 and the second support unit 32 disposed to face each other and injecting a pressurized fluid in opposite directions, a first fluid pressurizing unit 33 that applies pressure to the first pressurized fluid F1 injected from the first support unit 31, and a second fluid pressurizing unit 34 that applies pressure to the second pressurized fluid F2 injected from the second support unit 32.

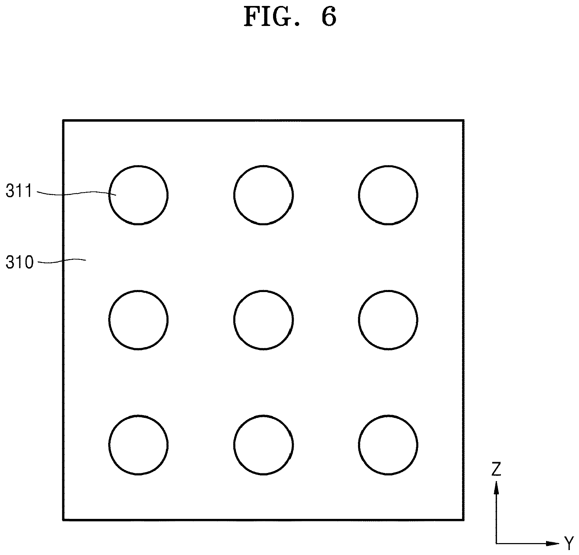

The first support unit 31 has a plate shape extending along one plane (the YZ plane), and may inject the first pressurized fluid F1 in the 1^{st}-1^{st} direction (the +X direction) perpendicular to the one plane (the YZ plane). For example, the first support unit 31 may be a porous plate capable of injecting the first pressurized fluid F1. As another example, the first support unit 31 may include one or more injection portions 311 (see FIG. 6) for injecting the first pressurized fluid F1. The first support unit 31 may have a height h corresponding to a height k1 of the first area E1 of the electrode E shown in FIG. 3 in the direction of gravity (the -Z direction). For example, the first pressurized fluid F1 may be clean dry air (CDA), but the disclosure is not limited thereto. As the first pressurized fluid F1, any fluid that supports the first area E1 of the electrode E may be used.

The first support unit 31 according to an example may be disposed to be apart from the electrode E in the 1^{st}-1^{st} direction (the +X direction) with a first distance D1 therebetween. For example, the first distance D1 may be 0.01 mm or more and 1 mm or less. However, the disclosure is not limited thereto, and the first distance D1 may be changed according to a change in the type and weight of the electrode E. In addition, the first pressurized fluid F1 injected from the first support unit 31 may apply certain pressure to the first area E1 of the electrode in the 1^{st}-1^{st} direction (the +X direction). For example, first pressure applied to the first area E1 of the electrode E by the first pressurized fluid F1 may be, for example, 0.001 Mpa or more and 0.3 Mpa or less. However, the disclosure is not limited thereto, and the first fluid pressurizing unit 33 may change the first pressure by adjusting a flow rate of the first pressurized fluid F1 according to a change in the type and weight of the electrode E.

The second support unit 32 has a plate shape extending along one plane (the YZ plane), and may inject the second pressurized fluid F2 in the 1^{st}-2^{nd} direction (the -X direction) perpendicular to the one plane (the YZ plane). For example, the second support unit 32 may be a porous plate capable of injecting the second pressurized fluid F2. As another example, the second support unit 32 may include one or more injection portions for injecting the second pressurized fluid F2. The second support unit 32 is disposed to face the first support unit 31, and may have a height corresponding to the height h of the first support unit 31. For example, the second pressurized fluid F2 may be CDA, but the disclosure is not limited thereto. As the second pressurized fluid F2, any fluid that supports the first area E1 of the electrode E may be used.

The second support unit 32 according to an example may be disposed to be apart from the electrode E in the 1^{st}-2^{nd} direction (the -X direction) with a second distance D2 therebetween. For example, the second interval D2 may be 0.01 mm or more and 1 mm or less. However, the disclosure is not limited thereto, and the second distance D2 may be changed according to a change in the type and weight of the electrode E. In addition, the second pressurized fluid F2 injected from the second support unit 32 may apply certain pressure to the first area E1 of the electrode in the 1^{st}-2^{nd} direction (the -X direction). For example, second pressure applied to the first area E1 of the electrode by the second pressurized fluid F2 may be, for example, 0.001 Mpa or more and 0.3 Mpa or less. However, the disclosure is not limited thereto, and the second fluid pressurizing unit 34 may change the second pressure by adjusting a flow rate of the second pressurized fluid F2 according to a change in the type and weight of the electrode E.

As described above, in a direction corresponding to each other of the first support unit 31 and the second support unit 32, for example, in the 1^{st}-1^{st} direction (the +X direction) and the 1^{st}-2^{nd} direction (-X direction), the first area E1 of the electrode E may be supported in a non-contact manner by injecting the first pressurized fluid F1 and the second pressurized fluid F2. Accordingly, product defects and an increase in manufacturing cost that may occur due to excessive adsorption and friction between the electrode E and the electrode support unit 30 may be effectively prevented.

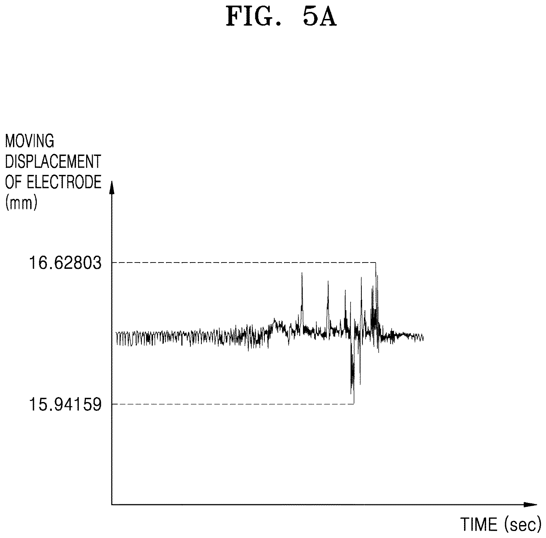

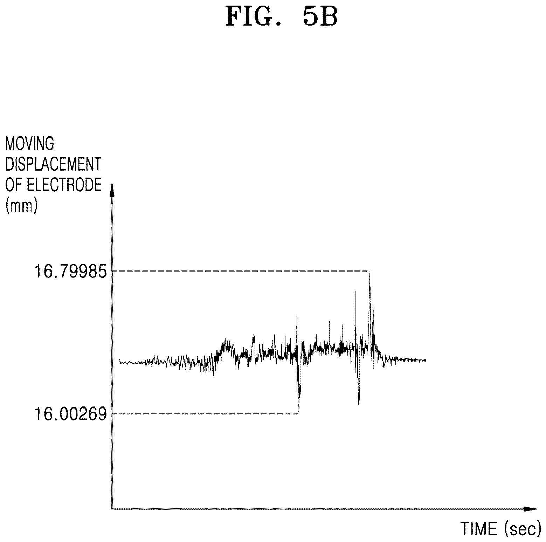

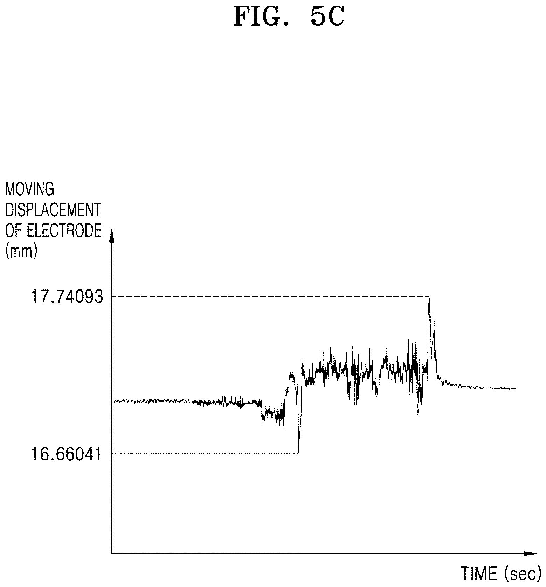

FIG. 5A is a graph illustrating vibration of the electrode E supported by an electrode support unit according to a comparative example. FIG. 5B is a graph illustrating vibration of the electrode E supported by an electrode support unit according to Example 1. FIG. 5C is a graph illustrating vibration of the electrode E supported by an electrode support unit according to Example 2.

### [Example 1]

As the electrode M, an aluminum foil having a thickness of 20 micrometers is used. The electrode M moves in a direction of gravity at a speed of 1500 mm/s. The first support unit 31 disposed to face one surface of the electrode M is disposed to be apart from one surface of the electrode E in the 1^{st}-1^{st} direction (the +X direction) with the first distance D1 of 0.35 mm therebetween, and blows air as a pressurized fluid. First pressure of 0.04 Mpa is applied to one surface of the electrode M by the first support unit 31. The second support unit 32 disposed to face the other surface of the electrode M is disposed to be apart from one surface of the electrode E in the 2^{nd}-2^{nd} direction (the +X direction) with the second distance D2 of 0.35 mm therebetween, and blows air as a pressurized fluid. The second pressure of 0.04 Mpa is applied to the other surface of the electrode M by the second support unit 32.

### [Example 2]

Example 2 is the same as Example 1 except that the first pressure and the second pressure applied by the first support unit 31 and the second support unit 32 are 0.06 Mpa.

### [Comparative example]

The Comparative example is the same as Example 1 except that the first pressure and the second pressure applied by the first support unit 31 and the second support unit 32 are 0 Mpa.

Referring to FIG. 5A, the electrode M supported on the electrode support unit 30 according to Example 1 has a maximum displacement (Max) of 16.62803 mm and a minimum displacement (Min) of 15.94159 mm in one direction (an X direction) perpendicular to one plane. Accordingly, it can be seen that a difference (Max-Min) between the maximum displacement (Max) and the minimum displacement (Min) of an electrode, that is, an electrode M, is 0.68644 mm.

Referring to FIG. 5B, the electrode M supported on the electrode support unit 30 according to Example 2 has a maximum displacement (Max) of 16.79985 mm and a minimum displacement (Min) of 16.00269 mm in one direction (the X direction) perpendicular to one plane. Accordingly, it can be seen that a difference (Max-Min) between the maximum displacement (Max) and the minimum displacement (Min) of an electrode, that is, the electrode M, is 0.79716mm.

Referring to FIG. 5C, the electrode M supported on the electrode support unit 30 according to the Comparative example has a maximum displacement (Max) of 17.740931 mm and a minimum displacement (Min) of 16.66041 mm in one direction (the X direction) perpendicular to one plane. Accordingly, it can be seen that a difference (Max-Min) between the maximum displacement (Max) and the minimum displacement (Min) of an electrode M, that is, the electrode M, is 1.08052 mm.

Referring to FIGS. 5A to 5C, when disposing the first support unit 31 and the second support unit 32 at the same distances (D1 and D2) as one surface and the other surface of the electrode M, it can be seen that the vibration of the electrode M is reduced in a section in which the first pressure and the second pressure are 0.02 Mpa or more and 0.04 Mpa, respectively.

FIG. 6 is a plan view of a first support unit according to an embodiment. FIG. 7A is a plan view of a first support unit according to another embodiment. FIG. 7B is a side cross-sectional view of the first support unit shown in FIG. 7A.

Referring to FIG. 2 and FIG. 6, the first support unit 31 may include the one or more injection portions 311 for injecting the first pressurized fluid F1. Because the first support unit 31 and the second support unit 32 may be provided in a shape corresponding to each other, the first support unit 31 is mainly described here for convenience of description. For example, the one or more injection portions 311 may be disposed on one plane 310 of the first support unit 31 facing the electrode E. The number of injection portions 311 may be determined depending on the types of the injection portions 311. For example, when an injection portion 311 is provided with a nozzle structure capable of injecting a high-pressure fluid and the first pressurized fluid F1 is uniformly injected from the injection portion 311, a plurality of injection portions 311 may be provided to have uniform intervals on the one plane 310 of the first support unit 31. For example, when the diameter of the one or more injection portions 311 is less than 0.01 mm, first pressure applied to the first area E1 of the electrode by the first pressurized fluid F1 may be, for example, 0.006 Mpa or more and 0.3 Mpa or less. In addition, when the diameter of the one or more injection portions 311 is 0.01 mm or more, the first pressure applied to the first area E1 of the electrode E by the first pressurized fluid F1 may be, for example, 0.001 Mpa or more and 0.1 Mpa or less.

However, the disclosure is not limited thereto, and when the injection portion 311 has an orifice structure as shown in FIGS. 7A and 7B, the injection portion 311 may have a single structure. Uniform pressure may be applied to the first area E1 of the electrode E by the first pressurized fluid F1 discharged from the injection portion 311 provided in the orifice structure. For example, the first pressure applied to the first area E1 of the electrode E by the first pressurized fluid F1 may be, for example, 0.001 Mpa or more and 0.18 Mpa or less.

FIG. 8 is a partial schematic view of an electrode manufacturing device according to an embodiment.

Referring to FIGS. 2 and 8, according to an example, the electrode E supported by the first support unit 31 and the second support unit 32 may be notched and cut by the laser beam L. Because the dust B generated by the notching and cutting process may be relatively light compared to the scrap S, the dust B may remain floating around the electrode E. In this case, interference of the laser beam L or a defect in the electrode E may occur due to the dust B floating around the electrode E. In order to remove the dust B floating around the electrode E, the first dust removal device 41 and the second dust removal device 42 may be disposed.

For example, the first dust removal device 41 may include a 1^{st}-1^{st} dust removal device 411, a 1^{st}-2^{nd} dust removal device 412, a first dust discharge unit 413 discharging the sucked dust B to the outside, and a first suction pressure-adjusting unit 414. According to an example, the 1^{st}-1^{st} dust removal device 411 may be disposed to include a suction port disposed on one side of the electrode E. In this case, the dust B floating near the electrode E may be sucked by 1^{st}-1^{st} suction pressure generated by the 1^{st}-1^{st} dust removal device 411. In addition, at this time, a 1^{st}-1^{st} fluid flow H1 is generated by the 1^{st}-1^{st} suction pressure, and the electrode E vibrates by the 1^{st}-1^{st} fluid flow H1, and thus, a focus position of the laser beam L may be inaccurate. In order to prevent a situation in which the electrode E vibrates, the 1^{st}-1^{st} fluid flow H1 may be formed in a direction different from the 1^{st}-1^{st} direction (the +X direction). For example, the 1^{st}-1^{st} fluid flow H1 may have a certain angle θ with respect to the 1^{st}-1^{st} direction (the +X direction), for example, an angle greater than 0 degrees and less than 90 degrees. As described above, because the 1^{st}-1^{st} fluid flow H1 is formed in a direction different from the 1^{st}-1^{st} direction (the +X direction), the vibration of the electrode E may be minimized.

According to an example, the 1^{st}-2^{nd} dust removal device 412 may be disposed to include a suction port disposed on the other side of the electrode E. In this case, the dust B floating near the electrode E may be sucked by 1^{st}-2^{nd} suction pressure generated by the 1^{st}-2^{nd} dust removal device 412. In addition, at this time, a 1^{st}-2^{nd} fluid flow H2 is generated by the 1^{st}-2^{nd} suction pressure, and the electrode E vibrates by the 1^{st}-2^{nd} fluid flow H2, and thus, the focus position of the laser beam L may be inaccurate. Because the 1^{st}-2^{nd} fluid flow H2 formed in a direction different from the 1^{st}-1^{st} direction (the +X direction) to prevent a situation in which the electrode E vibrates is substantially the same as the 1^{st}-1^{st} fluid flow H1, a description thereof will be omitted. The dust B sucked in by the 1^{st}-1^{st} dust removal device 411 and the 1^{st}-2^{nd} dust removal device 412 may be discharged to the outside through the first dust discharge unit 413. In this case, the first suction pressure adjusting unit 414 may adjust the 1^{st}-1^{st} suction pressure and the 1^{st}-2^{nd} suction pressure respectively applied to the 1^{st}-1^{st} dust removal device 411 and the 1^{st}-2^{nd} dust removal device 412 according to the size and weight of the dust B.

For example, the second dust removal device 42 may include a 2^{nd}-1^{st} dust removal device 421, a 2^{nd}-2^{nd} dust removal device 422, a second dust discharge unit 423 discharging the sucked dust B to the outside, and a second suction pressure-adjusting unit 424. According to an example, the 2^{nd}-1^{st} dust removal device 421, in which a 2^{nd}-1^{st} fluid flow H3 is generated by 2^{nd}-1^{st} suction pressure, and the 2^{nd}-2^{nd} dust removal device 422, in which a 2^{nd}-2^{nd} fluid flow H4 is generated by the 2^{nd}-2^{nd} suction pressure, are disposed to face each other with the 1^{st}-1^{st} dust removal device 411 and the 1^{st}-2^{nd} dust removal device 412. The 2^{nd}-1^{st} dust removal device 421 and the 2^{nd}-2^{nd} dust removal device 422 are substantially the same as the 1^{st}-1^{st} dust removal device 411 and the 1^{st}-2^{nd} dust removal device 412 except for being disposed to face the other surface of the electrode E. Therefore, the description thereof is omitted here for convenience of description. The dust B sucked in by the 2^{nd}-1^{st} dust removal device 421 and the 2^{nd}-2^{nd} dust removal device 422 may be discharged to the outside through the second dust discharge unit 423. In this case, the second suction pressure adjusting unit 424 may adjust the 2^{nd}-1^{st} suction pressure and the 2^{nd}-2^{nd} suction pressure respectively applied to the 2^{nd}-1^{st} dust removal device 421 and the 2^{nd}-2^{nd} dust removal device 422 according to the size and weight of the dust B.

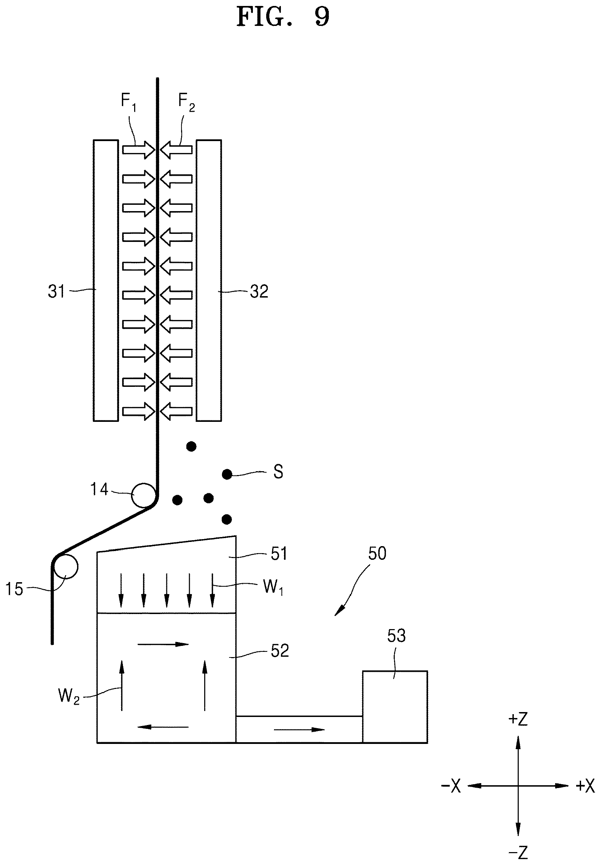

FIG. 9 is a partial schematic view of an electrode manufacturing device according to an embodiment.

Referring to FIGS. 2 and 9, the electrode E according to an example may be supported by the first support unit 31 and the second support unit 32 in the direction of gravity (the -Z direction). The electrode E supported by the first support unit 31 and the second support unit 32 may be notched and cut by the laser beam L. The scrap S generated by the notching and cutting process may freely fall in the direction of gravity (the -Z direction).

According to an example, certain third suction pressure is formed in the first scrap removal area 51 located at an upper portion of the scrap removal unit 50 in the direction of gravity (the -Z direction) to suck the free falling scrap S. Accordingly, the scrap S that freely falls in the direction of gravity (the -Z direction) may be collected so as not to scatter to the outside.

For example, the first scrap removal area 51 may be disposed below the laser beam notching unit 20 corresponding to a processing area. At this time, a third fluid flow W1 is generated by the third suction pressure generated in the first scrap removal area 51, and the electrode E vibrates by the third fluid flow W₁, so that the focus position of the laser beam L may be inaccurate. In order to prevent a situation in which the electrode E vibrates, the third fluid flow W₁ may be formed in the direction of gravity (the -Z direction). In addition, because the scrap S according to an embodiment is freely falling by gravity, the size of the third suction pressure for preventing scattering of the scrap S and collecting the scrap S may be formed to be relatively small, and accordingly, the vibration of the electrode E may be minimized.

According to an example, certain fourth suction pressure is formed in the second scrap removal area 52 located below the first scrap removal area 51 in a direction different from the direction of gravity (the -Z direction), so that the scrap S collected in the first scrap removal area 51 may be discharged to the outside.

For example, because the second scrap removal area 52 is disposed below the first scrap removal area 51, there is no fear that the electrode E vibrates by a fourth fluid flow W₂ generated by the fourth suction pressure. Accordingly, the fourth fluid flow W₂ may be formed in a direction different from the direction of gravity (the -Z direction), for example, a rotational direction such as a clockwise direction or a counterclockwise direction. In addition, in the second scrap removal area 52, in order to minimize the time that the scrap S collected in the first scrap removal area 51 remains in the processing area, the fourth suction pressure may be greater than the third suction pressure.

An electrode manufacturing device according to an embodiment may effectively prevent product defects and an increase in manufacturing cost, which may occur due to excessive adsorption and friction between an electrode and a support unit, by supporting the electrode in a non-contact manner in a laser beam notching process.

In addition, an electrode manufacturing device according to an embodiment may effectively prevent product defects by adjusting a discharge path of dust and scrap generated by a laser beam notching process to minimize laser beam interference that may be generated by the dust and scrap.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

## Claims

1. An electrode manufacturing device comprising:
a first support unit having a plate shape extending along a plane and configured to inject a first pressurized fluid in a 1^{st}-1^{st} direction perpendicular to the plane;
a second support unit having a plate shape extending along one plane, disposed to face the first support unit at a certain distance, and configured to inject a second pressurized fluid in a 1^{st}-2^{nd} direction opposite to the 1^{st}-1^{st} direction;
a transfer unit configured to transfer an electrode having a sheet-shape in a direction of gravity and dispose a first area of the electrode between the first support unit and the second support unit; and
a laser beam notching unit configured to notch and cut a portion of a second area of the electrode by irradiating a laser beam to the electrode in the 1^{st}-1^{st} direction.

2. The electrode manufacturing device of claim 1, wherein the certain distance between the first support unit and the second support unit is 0.01 mm or more and 1 mm or less.

3. The electrode manufacturing device of claim 1, wherein pressure applied to a first surface of the electrode by the first support unit is 0.001 Mpa or more and 0.3 Mpa or less, and pressure applied to a second surface of the electrode by the second support unit is 0.001 Mpa or more and 0.3 Mpa or less.

4. The electrode manufacturing device of claim 1, wherein the first support unit includes one or more injection portions injecting the first pressurized fluid , and
the second support unit includes one or more injection portions injecting the second pressurized fluid.

5. The electrode manufacturing device of claim 4, wherein the one or more injection portions provided in the first support unit are provided in plurality, and are arranged to have uniform intervals on one plane of the first support unit disposed to face the electrode, and
the one or more injection portions provided in the second support unit are provided in plurality, and are arranged to have uniform intervals on one plane of the second support unit disposed to face the electrode.

6. The electrode manufacturing device of claim 4, wherein the one or more injection portions provided in the first support unit are provided as one, and include an orifice structure, and
the one or more injection portions provided in the second support unit are provided as one, and include an orifice structure.

7. The electrode manufacturing device of claim 4, wherein at least one of the first support unit and the second support unit includes a porous plate.

8. The electrode manufacturing device of claim 1, further comprising:
a first fluid pressurizing unit configured to adjust pressure of the first pressurized fluid and a second fluid pressurizing unit configured to adjust pressure of the second pressurized fluid.

9. The electrode manufacturing device of claim 1, further comprising:
a dust removal unit configured to apply suction pressure to remove dust generated from the process of notching and cutting the electrode using the laser beam.

10. The electrode manufacturing device of claim 9, wherein the dust removal unit includes a first dust removal device and a second dust removal device disposed to face each other with the electrode therebetween.

11. The electrode manufacturing device of claim 10, wherein the first dust removal device includes a 1^{st}-1^{st} dust removal device including a suction port disposed on one side of the electrode and a 1^{st}-2^{nd} dust removal device including a suction port disposed on the other side of the electrode.

12. The electrode manufacturing device of claim 11, wherein a direction of a 1^{st}-1^{st} fluid flow generated by 1^{st}-1^{st} suction pressure in the 1^{st}-1^{st} dust removal device is different from the 1^{st}-1^{st} direction, and
a direction of a 2^{nd}-1^{st} fluid flow generated by 2^{nd}-1^{st} suction pressure in the1^{st}-2^{nd} dust removal device is different from the 1^{st}-1^{st} direction.

13. The electrode manufacturing device of claim 10, wherein the second dust removal device includes a 2^{nd}-1^{st} dust removal device including a suction port disposed on one side of the electrode and a 2^{nd}-2^{nd} dust removal device including a suction port disposed on the other side of the electrode.

14. The electrode manufacturing device of claim 13, wherein a direction of a 1^{st}-1^{st} fluid flow generated by 2^{nd}-1^{st} suction pressure in the 2^{nd}-1^{st} dust removal device is different from the 1^{st}-2^{nd} direction, and
a direction of a 2^{nd}-1^{st} fluid flow generated by 2^{nd}-2^{nd} suction pressure in the 2^{nd}-2^{nd} dust removal device is different from the 1^{st}-2^{nd} direction.

15. The electrode manufacturing device of claim 10, further comprising:
a first suction pressure-adjusting unit configured to adjust suction pressure of the first dust removal device and a second suction pressure-adjusting unit configured to adjust suction pressure of the second dust removal device.

16. The electrode manufacturing device of claim 1, further comprising:
a scrap removal unit disposed below the first support unit and the second support unit in the direction of gravity, and configured to suck scrap falling by gravity and discharge the scrap to the outside.

17. The electrode manufacturing device of claim 16, wherein the scrap removal unit comprises:
a first scrap removal area and a second scrap removal area respectively disposed at upper and lower portions of the scrap removal unit in the direction of gravity; and
a pump configured to apply suction pressure to the first scrap removal area and the second scrap removal area.

18. The electrode manufacturing device of claim 17, wherein a third fluid flow in the direction of gravity is formed in the first scrap removal area by third suction pressure, and
a fourth fluid flow in a direction different from the direction of gravity is formed in the second scrap removal area by fourth suction pressure.

19. The electrode manufacturing device of claim 18, wherein the fourth suction pressure exceeds the third suction pressure.

20. The electrode manufacturing device of claim 1, wherein the transfer unit moves the electrode at a speed of 1250 mm/s or more and 6000 mm/s or less.
